# EUROPEAN PATENT SPECIFICATION

(11) **EP 4 021 194 B1**
(45) Date of publication and mention of the grant of the patent: **31.07.2024**
(21) Application number: 20804584.9
(22) Date of filing: 18.11.2020
(51) Int. Cl.: A23F 3/40

(54) **A BLACK LEAF TEA PRODUCT**
PRODUKT AUS SCHWARZEM BLATTTEE
PRODUIT DE THÉ NOIR EN FEUILLES

(30) Priority: 21.11.2019 EP 19210732
(43) Date of publication of application: 06.07.2022
(73) Proprietor: Ekaterra Research and Development UK Limited, Sharnbrook, Bedfordshire MK44 1LQ (GB)
(72) Inventor: MUKHERJEE, Shreya, Kolkata 700 068 (IN); BASAVARAJU, Lokesh, Whitefield, Bangalore 560 066 (IN); JAHABARDEEN, Mohamed, Sirajudeen, Thiruvarur 614 716 (IN); CHANGARATH, Jayasree, Whitefield, Bangalore 560 066 (IN)
(74) Representative: Mewburn Ellis LLP
(86) International application number: PCT/EP2020/082478
(87) International publication number: WO 2021/099352

(56) References cited:
- JONATHAN WRIGHT ET AL: "Effect of Preparation Conditions on Release of Selected Volatiles in Tea Headspace", JOURNAL OF AGRICULTURAL AND FOOD CHEMISTRY, vol. 55, no. 4, 1 February 2007 (2007-02-01), US, pages 1445 - 1453, XP055684919, ISSN: 0021-8561, DOI: 10.1021/jf062657v
- SMIT BART A ET AL: "Branched chain aldehydes: production and breakdown pathways and relevance for flavour in foods", APPLIED MICROBIOLOGY AND BIOTECHNOLOGY, SPRINGER BERLIN HEIDELBERG, BERLIN/HEIDELBERG, vol. 81, no. 6, 1 January 2009 (2009-01-01), pages 987 - 999, XP037016415, ISSN: 0175-7598, [retrieved on 20090101], DOI: 10.1007/S00253-008-1758-X
- ATILLA POLAT ET AL: "Comparison of black tea volatiles depending on the grades and different drying temperatures", JOURNAL OF FOOD PROCESSING AND PRESERVATION, vol. 42, no. 7, 1 July 2018 (2018-07-01), TRUMBULL, CT, US, pages e13653, XP055687220, ISSN: 0145-8892, DOI: 10.1111/jfpp.13653
- DATABASE WPI Week 201921, Derwent World Patents Index; AN 2019-24160G, XP002798746
- DATABASE WPI Week 201361, Derwent World Patents Index; AN 2013-M95815, XP002798747

## Description

### Field of the invention

The present invention relates to a black leaf tea product. More particularly a black leaf tea product with altered aroma characteristics.

### Background of the invention

Tea is one of the most popular beverages consumed throughout the world. There are varieties of teas available for consumption e.g. black tea, green tea, oolong tea. Out of these, black tea is more popular. Black tea is generally prepared by a process which includes the steps of withering, macerating, fermenting and firing/drying. On the other hand, green tea manufacturing process does not include the step of fermentation. Therefore, the characteristic profile of green tea is different from that of black tea.

The organoleptic properties of teas are considered to be the most important factor for choosing a particular type of tea. Aroma is one of such organoleptic property which determines the quality and type of a tea product. The organoleptic properties including the aroma profile of black tea is quite different to that of green tea because of the difference in the manufacturing process. Black teas are associated with higher aroma e.g. floral notes, woody notes. On the other hand, green tea is devoid of all these black tea aromas.

Black teas and green teas with altered aroma profiles have been disclosed in the art.

US2007071870 (Unilever, 2007) discloses a process for making black or green tea with the floral aroma of oolong tea. The process utilizes tumbling to physically wound the leaves to initiate the oolong aromas and does not involve a traditional solar wither step.

CN107549344A (GUANGXI ZHAOPING TIANCHENG ECOLOGICAL AGRICULTURAL CO LTD, 2018) discloses a chestnut-flavored high-aroma green tea and a preparation method thereof and belongs to the technical field of tea processing. The chestnut-flavored high-aroma green tea is processed by the steps of withering, fixation, rolling, tea frying, secondary rolling, sorting, baking and the like. Tea leaves picked after mid-August are used as raw materials, tea leaf resources are fully utilized, and the utilization ratio of autumn tea is improved; and the preparation method of the high-aroma green tea is simple, short in process, easy to operate, and easy to realize industrial production.

WO2019/049264 describes a tea with up to 100 mass ppb 2-methylbutanal, and JP2013169152 describes a tea beverage comprising 23-100 ppb 2-methylbutanal and/or 3-methylbutanal.

Floral and green aromas are quite commonly known for tea products. However, a tea product with aroma that provides malty/buttery notes has not been disclosed in the art. Furthermore, we have found that the malty/buttery notes provide a rich organoleptic property to a black tea product which is preferred by consumers.

Therefore, there is a need to provide a black tea product with aroma that provides malty/buttery notes.

The present inventors while working on the above problem have surprisingly found that a particular group of compounds are responsible for providing malty/buttery notes to a tea product. Moreover, the present inventors have found that when such compounds are available only above a certain level in a black tea product such malty/buttery notes are perceivable.

### Summary of the invention

Accordingly, in a first aspect of the present invention there is provided a black leaf tea product comprising methylbutanal compounds in the range of 4.5 to 10 mg/kg of tea leaf.

In a second aspect the present invention provides a tea blend comprising 5 to 99% of the tea product of the first aspect.

These and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples *per se*. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

"Tea" for the purposes of the present invention preferably means material from *Camellia sinensis* var. *sinensis* and/or *Camellia sinensis* var. *assamica.*

Especially preferred is material from var. *assamica* as this has a higher level of tea actives than var. *sinensis.*

"Leaf tea" for the purposes of this invention preferably means a tea product that contains tea leaves and/or stem in an uninfused form, and that has been dried to a moisture content of less than 30% by weight, and usually has a water content in the range 1 to 10% by weight (i.e. "made tea").

"Fresh tea leaf" refers to tea leaf, buds and/or stem that have never been dried to a water content of less than 30% by weight, and usually have moisture content in the range 60 to 90%.

"Fermentation" refers to the oxidative and hydrolytic process that tea undergoes when certain endogenous enzymes and substrates are brought together, e.g. by mechanical disruption of the cells by maceration of the leaves. During this process, colourless catechins in the leaves are converted to a complex mixture of yellow and orange to dark-brown polyphenolic substances.

"Black tea" refers to substantially fermented tea. Black tea has different characteristics to green tea. Black tea is more astringent in taste and less bitter than green tea. The redness of black tea liquor is also significantly higher than that of green tea. Black tea also contains higher level of theaflavins.

The present invention provides a black leaf tea product comprising methylbutanal compounds is in the range of 4.5 to 10 mg/kg of tea leaf. Preferably the amount of methylbutanal compounds is in the range of 4.75 to 10 mg/kg of tea leaf, more preferably in the range of 5.0 to 8 mg/kg of tea leaf and most preferably in the range of 5 to 7 mg/kg of tea leaf.

The preferred methylbutanal compounds comprise 2-methylbutanal and 3-methylbutanal. In the most preferred aspect of the present invention the methylbutanal compounds are 2-methylbutanal and 3-methylbutanal. The structures of 2-methylbutanal and 3-methylbutanal are represented below:

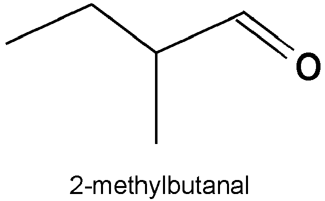

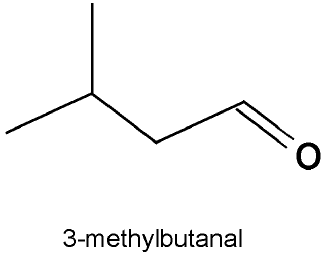

The tea product of the present invention preferably further comprises 2-methylpropanal. 2-methylpropanal has the following structure:

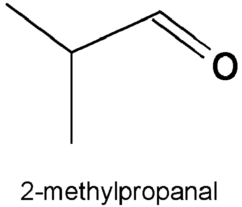

The 2-methylpropanal is preferably present in the range of 2 to 7 mg/kg of tea leaf, more preferably in the range of 2 to 6 mg/kg of tea leaf and most preferably in the range of 2 to 5 mg/kg of tea leaf.

The tea product of the present invention also preferably comprises phenylacetaldehyde, which has the following structure:

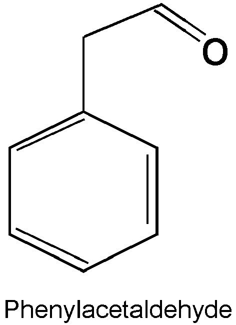

The combined amount of 2-methylbutanal, 3-methylbutanal and 2-methylpropanal is preferably in the range of 6.5 to 17 mg/kg of tea leaf, more preferably in the range of 6.5 to 12 and most preferably in the range of 7 to 12 mg/kg of tea leaf.

The tea product of the present invention is preferably a black tea product. The tea product is preferably obtained from the plant *Camelia sinensis.*

The tea product of the present invention may preferably be prepared by adding methyl butanal compounds in the final leaf tea product at a desired ratio as disclosed above. The most preferred leaf tea product is a black leaf tea product.

Alternatively, the tea product of the present invention may be obtained by producing a black tea product with tea leaves that preferably have a conductivity greater than 100 µS wherein the conductivity is measured by placing the leaf in water for about 10 minutes to 2 hours and measuring the conductivity of the resulting water. More preferably the conductivity is greater than 150 µS and most preferably greater than 200 µS. The tea leaves are preferably placed in water for about 15 minutes to 1 hours and most preferably for 30 minutes to 45 minutes.

The tea leaves that provide conductivity greater than 100 µS as disclosed above are preferably obtained by keeping the fresh tea leaves in a carbon dioxide enriched environment with humidity greater than 90%, preferably greater than 95% and most preferably greater than 98%.

The above-mentioned tea leaves are then preferably subjected to a step of maceration to produce dhool. This step of size reduction is preferably carried out by crushing, tearing and curling (known in the art of tea processing as CTC). One or more CTC steps may be carried out. In this step the incubated leaf breaks up and releases enzymes that exist in the leaf.

Alternatively, the maceration step can be carried out by rolling the tea leaves in an orthodox roller or comminuted in a rotorvane, or a combination thereof. During these steps, precursors present in the tea leaf become amenable to the enzymes.

The macerated leaves then preferably undergo fermentation. It is a process in which the macerated tea leaves undergo biochemical changes in presence of endogenous enzymes present in the tea leaves. This process leads to the formation of the typical organoleptic properties of black leaf tea products. Fermentation is preferably carried out by keeping the leaf at a temperature of from 10°C to 60°C for 15 minutes to 5 hours. Preferably, the temperature of the fermentation is from 25 to 45°C and more preferably from 25 to 40°C. The time for fermentation is preferably 30 minutes to 4 hours, more preferably 1 to 4 hours and most preferably 1 to 3 hours.

After fermentation, the fermented dhool may preferably be dried. During the drying step, the dhool is dried to a moisture content preferably less than 10% by weight of the tea leaf, more preferably less than 5 % by weight of the tea leaf, to obtain the black leaf tea product.

The drying step is preferably carried out by thermal drying, freeze drying or vacuum drying.

Thermal drying is preferably carried out by contacting the leaf with air; with the temperature of air being preferably 80 to 160°C, more preferably 90 to 150°C, most preferably 100 to 130°C. Thermal drying may be carried out in any conventional dryer. However, a fluidized bed dryer or a tray dryer is particularly preferred for thermal drying. The leaf can also be dried by vacuum drying. During vacuum drying the tea leaf is subjected to an absolute pressure of preferably from 66.7 to 6.67 × 10⁴ Pa, more preferably from 6.67 × 10³ to 3.9 × 10⁴ Pa and most preferably from 1.3 × 10⁴ to 2.67 × 10⁴ Pa. Vacuum drying is carried out at a temperature in the range of preferably 20 to 70°C, more preferably 25 to 60 °C and most preferably 30 to 55 °C. Vacuum drying may be carried out in any suitable vacuum drier, preferably in a rotary vacuum drier.

The present invention also provides a tea blend comprising 5 to 99%, preferably 5 to 50% by weight of the tea product of the present invention.

The invention will now be demonstrated in terms of examples. The following examples are for illustration alone and in no way limit the scope of the present invention.

### Examples

### Preparation of different tea products:

All the experiments were carried out in Kenya using fresh tea leaf obtained from a Kenyan tea garden.

### Example A:

Fresh tea leaves were harvested from a Kenyan tea garden. The moisture content of the tea product was around 78%. The tea leaves were withered for 72 hours at a temperature of 25°C. The tea leaves were then subjected to CTC (cut tear curl) for 4 times to obtain macerated dhool. The macerated dhool was then fermented (exposed to air at 25°C) for 90 minutes and then dried to a moisture content of less than 5% by weight (at 140°C) to obtain a black leaf tea product.

### Example 1:

Fresh tea leaves were harvested from a Kenyan tea garden. The moisture content of the tea product was around 78%. The tea leaves were placed in an environment enriched (about 20% by volume) with carbon di-oxide with a humidity of 98% for 24 hours at a temperature of 25°C until the conductivity reached 250 µS. The tea leaves were then subjected to CTC for 4 times to obtain macerated dhool. The macerated dhool was then fermented (exposed to air at 25°C) for 90 minutes and then dried to a moisture content of less than 5% by weight (at 140°C) to obtain a black leaf tea product.

### Example 2:

Fresh tea leaves were harvested from a Kenyan tea garden. The moisture content of the tea product was around 78%. The tea leaves were placed in an environment enriched (about 20% by volume) with carbon dioxide with a humidity of 98% for 72 hours at a temperature of 25°C until the conductivity reached 250 µS. The tea leaves were then subjected to CTC (cut tear curl) for 4 times to obtain macerated dhool. The macerated dhool was then fermented (exposed to air at 25°C) for 90 minutes and then dried to a moisture content of less than 5% by weight (at 140°C) to obtain a black leaf tea product.

The above tea products were analyzed for 2-methylbutanal (2MB), 3-methylbutanal (3MB) and 2-methylpropanal (2MP) using the following protocol:
First, 2g of the tea was brewed with 200 mL of hot water for 2 min and strained to generate black tea infusions.

Gas chromatography (GC) was used to characterize the aroma profiles of the tea infusions as follows. 4 mL of infusion was placed in a capped GC vial. Aroma was measured in the headspace using a SPME (solid phase micro extraction) fibre after the samples were pre-incubated (10 min) and then kept at 70°C for 20 min. The conditions for gas chromatography and aroma extraction by SPME are given below.

### GC-MS conditions:

Volatile compounds from tea samples were analysed using a gas chromatograph with a MS detector (Agilent 7890B). A CP-wax 52 CB (30m × 0.25mm, film thickness 0.15µm) column was used for analysis. The injector was operated in a split less configuration with helium as the carrier gas at a constant flow rate of 1.0mL/min. The injector was maintained at 230°C. The oven ramp was given as follows: initial temperature of 45°C held for 3 min, followed by 5°C /min to 180°C hold for 0min and finally 10°C /min to 230°C for 10 min.

### SPME Conditions:

Analysis of volatile compounds released from the tea samples was carried out using SPME. More particularly, a 2cm stable flex fiber, coated with 50/30µm poly(divinylbenzene) (DVB) / carboxen (CAR) / poly(dimethylsiloxane) (PDMS) (Supelco, Bellefonte, PA) was used with automated SPME system (Combi PAL system).

Equipment specifications and Experimental Conditions:
SPME Fiber: Grey fiber (PDMS/DVB/CAR)
Pre-Incubation time: 10:00 min
Incubation temp: 70°C
Needle Penetration: 12 mm
Fiber Penetration: 20 mm
Extraction Time: 20:00 min
Desorb to: GC Injector port 1
Injection Time: 5:00 min
Post fiber Condition time: 15 min
GC Run time: 40 min
Cooling time: 10min
Fiber conditioning temp: 230°C
MS conditions:
   Tune type: EI
   Tune EMV : 1073
   MS Source: 230°C
   Scan Range: 50-500 (mass)
   Gain factor: 1

The peak area was calculated for the individual volatile compounds from the GC chromatograms. Standard concentration curves are generated for each volatile. These standard curves are used to convert the peak area to a concentration for the respective volatiles,

The results are summarized below:

**Table 1:**

| Example No. | 2MB + 3MB (mg/kg) | 2MP (mg/kg) | (2MB + 3MB + 2MP) (mg/kg) |
|---|---|---|---|
| A | 2.95 | 1.7 | 4.65 |
| 1 | 4.75 | 2.55 | 7.3 |
| 2 | 5.15 | 2.05 | 7.2 |

### Tasting the tea products of the present invention

The above tea products were also tasted by a panel of trained tea tasters. First, a difference test was carried out separately between example A and example 1 and then between example A and example 2 to test whether the panelists were able to pick any difference in the sample set. In both cases, the panelists were able to pick up products of example 1 and 2 as different from example A.

In the next study, a descriptive analysis to get product descriptions in terms of sensory attributes was carried out.
- For sample A, the main descriptors were that of woody, fresh green and black tea aroma.
- For both samples 1 and 2, the main descriptors were that of caramellic and malty with quite low intensity of fresh green and black tea aroma.

From the above examples it is evident that the tea products within the scope of the present invention (Example 1 and 2) have enhanced malty aroma notes compared to a control tea product (Example A).

## Claims

1. A black leaf tea product comprising methylbutanal compounds in the range of 4.5 to 10 mg/kg of tea leaf.

2. A tea product as claimed in claim 1 wherein the methylbutanal compounds comprise 2-methylbutanal and 3-methylbutanal.

3. A tea product as claimed in claim 2 wherein the methylbutanal compounds are 2-methylbutanal and 3-methylbutanal.

4. A tea product as claimed in any of claims 1 to 3 which further comprises 2-methylpropanal.

5. A tea product as claimed in claim 4 wherein the 2-methylpropanal is in the range of 2 to 7 mg/kg of tea leaf.

6. A tea product as claimed in any of claims 1 to 5 wherein the combined amount of 2-methylbutanal, 3-methylbutanal and 2-methylpropanal is in the range of 6.5 to 17 mg/kg of tea leaf.

7. A tea product as claimed in any of claims 1 to 6 further comprising phenylacetaldehyde.

8. A tea product as claimed in any of claims 1 to 7 wherein the black leaf tea product is obtained from the plant *Camelia sinensis.*

9. A tea blend comprising 5 to 99% of the tea product as claimed in any of claims 1 to 8.

10. A tea blend as claimed in claim 9 comprising 5 to 50% of the tea product as claimed in any of claims 1 to 8.

## Patentansprüche

1. Schwarzteeblattprodukt, umfassend Methylbutanal-Verbindungen im Bereich von 4,5 bis 10 mg/kg Teeblätter.

2. Teeprodukt nach Anspruch 1, wobei die Methylbutanal-Verbindungen 2-Methylbutanal und 3-Methylbutanal umfassen.

3. Teeprodukt nach Anspruch 2, wobei die Methylbutanal-Verbindungen 2-Methylbutanal und 3-Methylbutanal sind.

4. Teeprodukt nach einem der Ansprüche 1 bis 3, das weiters 2-Methylpropanal umfasst.

5. Teeprodukt nach Anspruch 4, wobei das 2-Methylpropanal im Bereich von 2 bis 7 mg/kg Teeblätter liegt.

6. Teeprodukt nach einem der Ansprüche 1 bis 5, wobei die kombinierte Menge von 2-Methylbutanal, 3-Methylbutanal und 2-Methylpropanal im Bereich von 6,5 bis 17 mg/kg Teeblätter liegt.

7. Teeprodukt nach einem der Ansprüche 1 bis 6, weiters umfassend Phenylacetaldehyd.

8. Teeprodukt nach einem der Ansprüche 1 bis 7, wobei das Schwarzteeblattprodukt von der Pflanze Camelia sinensis erhalten wird.

9. Teemischung, umfassend 5 bis 99 % eines Teeprodukts nach einem der Ansprüche 1 bis 8.

10. Teemischung nach Anspruch 9, umfassend 5 bis 50 % eines Teeprodukts nach einem der Ansprüche 1 bis 8.

## Revendications

1. Produit de thé noir en feuilles comprenant des composés de méthylbutanal dans la plage de 4,5 à 10 mg/kg de feuilles de thé.

2. Produit de thé selon la revendication 1, dans lequel les composés de méthylbutanal comprennent le 2-méthylbutanal et le 3-méthylbutanal.

3. Produit de thé selon la revendication 2, dans lequel les composés de méthylbutanal sont le 2-méthylbutanal et le 3-méthylbutanal.

4. Produit de thé selon l'une quelconque des revendications 1 à 3, qui comprend en outre du 2-méthylpropanal.

5. Produit de thé selon la revendication 4, dans lequel le 2-méthylpropanal est dans la plage de 2 à 7 mg/kg de feuilles de thé.

6. Produit de thé selon l'une quelconque des revendications 1 à 5, dans lequel la quantité combinée de 2-méthylbutanal, de 3-méthylbutanal et de 2-méthylpropanal est dans la plage de 6,5 à 17 mg/kg de feuilles de thé.

7. Produit de thé selon l'une quelconque des revendications 1 à 6, comprenant en outre du phénylacétaldéhyde.

8. Produit de thé selon l'une quelconque des revendications 1 à 7, dans lequel le produit de thé noir en feuilles est obtenu à partir de la plante *Camelia sinensis.*

9. Mélange de thé comprenant de 5 à 99 % du produit de thé selon l'une quelconque des revendications 1 à 8.

10. Mélange de thé selon la revendication 9, comprenant de 5 à 50 % du produit de thé selon l'une quelconque des revendications 1 à 8.
